# EUROPÄISCHE PATENTSCHRIFT

(11) **EP 3 245 702 B1**
(45) Veröffentlichungstag und Bekanntmachung des Hinweises auf die Patenterteilung: **27.02.2019**
(21) Anmeldenummer: 15794540.3
(22) Anmeldetag: 11.11.2015
(51) Int. Cl.: H02J 3/26, H02J 3/00, H02J 3/14, G01D 4/00, H02J 13/00

(54) **VERFAHREN ZUM BETREIBEN EINES ELEKTRISCHEN VERBRAUCHERS ODER ERZEUGERS AN EINEM TEILNEHMERNETZ SOWIE EINE SCHALTMATRIX**
METHOD FOR OPERATING AN ELECTRICAL LOAD OR GENERATOR ON A SUBSCRIBER NETWORK AND A SWITCHING MATRIX
PROCÉDÉ POUR FAIRE FONCTIONNER UN CONSOMMATEUR OU GÉNÉRATEUR ÉLECTRIQUE DANS UN RÉSEAU D'ABONNÉS ET MATRICE DE COMMUTATION

(30) Priorität: 12.01.2015 DE 102015000076
(43) Veröffentlichungstag der Anmeldung: 22.11.2017
(73) Patentinhaber: innogy Netze Deutschland GmbH, 45128 Essen (DE)
(72) Erfinder: GAUL, Armin, 59379 Selm (DE); DIEFENBACH, Ingo, 59425 Unna (DE)
(74) Vertreter: Cohausz & Florack
(86) Internationale Anmeldenummer: PCT/EP2015/076299
(87) Internationale Veröffentlichungsnummer: WO 2016/113015

(56) Entgegenhaltungen:
- EP-A2- 2 071 693
- EP-A2- 2 665 346
- DE-A1-102009 060 364
- JP-A- 2008 206 384
- US-A1- 2012 249 121

## Beschreibung

Der Gegenstand betrifft ein Verfahren, eine Vorrichtung und eine Schaltmatrix zum Betreiben von elektrischen Verbrauchern oder Erzeugern an einem Teilnehmernetz.

Der Betrieb eines Mehrphasennetzes, insbesondere eines Dreiphasennetzes, beispielsweise eines Drehstromnetzes, ist weitgehend geregelt. Hierbei ist insbesondere die Leistungsaufnahme eines Teilnehmernetzes pro Phase beschränkt, um zu verhindern, dass eine Differenz einer elektrischen Größe zwischen den Phasen einen Höchstwert überschreitet. Durch Unsymmetrien an dem Teilnehmer entstehen erhöhte Verluste in dem Teilnehmernetz, welche zu vermeiden sind. Insbesondere führt eine ungleiche Belastung des Teilnehmernetzes an den Phasen zu einer Nullpunktverschiebung/Sternpunktverschiebung. Um diese auszugleichen sind Ausgleichsströme im Nullleiter notwendig, die unnötige Verluste verursachen.

Darüber hinaus hat eine aufgrund ungleicher Belastung unsymmetrische Spannung im Drehstromnetz negative Auswirkungen auf Verbraucher, die auf eine möglichst symmetrische Spannung angewiesen sind (z.B. Drehstrom-Asynchronmotoren für kontinuierliches Drehmoment. Bei nicht kontinuierlichem Drehmoment besteht die Gefahr von Lagerschäden aufgrund eines "nicht rund laufen" des Motors).

In der Regel ist die Lastverteilung im Dreiphasennetz aufgrund einer statistischen Verteilung im Wesentlichen gleich. So ist beispielsweise in einem Haushalt das Teilnehmernetz durch den Elektriker an den drei Phasen L1, L2 und L3 des Verteilnetzes angeschlossen. Hierbei erfolgt ein Anschluss der Teilnehmer des Haushaltes an eine der drei Phasen L1, L2, L3 im Wesentlichen nach dem Zufallsprinzip, nämlich je nachdem, an welche Phase der Elektriker die jeweilige Zuleitung im Verteilkasten angeschlossen hat. Aufgrund dieser statistischen Verteilung einer Vielzahl von leistungsschwachen Teilnehmern ist davon auszugehen, dass die Unsymmetrie im Teilnehmernetz und mithin im Verteilnetz, hier der Niederspannungsebene, unbeachtlich ist und es eine mehr oder weniger gleichmäßige Phasenauslastung gibt.

Um jedoch signifikante Unsymmetrien, insbesondere durch den Betrieb einzelner leistungsstarker Teilnehmer zu verhindern, wird in den technischen Anschlussbedingungen (TAB Niederspannung) gefordert, dass leistungsstarke Verbraucher mit einer Grenzleistung, in Deutschland beispielsweise über 4,6 kVA, an allen drei Phasen des Teilnehmernetzes zu betreiben sind. Die Verbraucher müssen so ausgelegt sein, dass sie eine jeweils gleichmäßige Phasenbelastung hervorrufen. Außerdem ist in den technischen Anschlussbedingungen gefordert, dass die maximale Unsymmetrie pro Netzanschluss einen Maximalwert, in Deutschland beispielsweise 4,6 kVA, nicht überschreiten darf. Dies führt zu Einschränkungen der Teilnehmer, insbesondere dazu, dass Teilnehmer die nur einphasig betrieben werden, Leistungen von beispielsweise 4,6 kVA, insbesondere Leistungen, die der maximal zulässigen Unsymmetrie genügen, nicht überschreiten dürfen.

So ist es beispielsweise in Deutschland gefordert, dass einphasig angeschlossene Photovoltaikeinrichtungen nur maximal 4,6 kVA in diese Phase in das Verteilnetz einspeisen dürfen. Auch einphasig ladende Elektrofahrzeuge dürfen aus dieser einzelnen Phase nicht mehr als 4,6 kVA beziehen. Die technischen Anschlussbedingungen führen somit zur Leistungsbeschränkung angeschlossener Teilnehmer aufgrund der geforderten Symmetrie an den Phasen des Verteilnetzes, welche im Zweifel zu einer Leistungseinschränkung der Teilnehmer führen kann. Die tatsächlich über das Teilnehmernetz übertragbare Leistung ist wesentlich höher als die angegebene Grenzleistung, darf jedoch aus Gründen der geforderten Symmetrie am Übergabepunkt die Grenzleistung nicht überschreiten.

Der Anschluss von Elektrofahrzeugen wird zunehmend als problematisch erkannt. So belasten Elektrofahrzeuge das Netz weder zeitlich noch räumlich deterministisch vorhersagbar. Auch wollen Autohersteller zum Teil auch zweiphasig laden, so dass die zulässige Schieflast zukünftig auch nur auf der vom Fahrzeug nicht belasteten Phase liegen kann. Es kann zu erheblichen Schieflasten kommen, wenn nicht in den Betrieb solcher Verbraucher eingegriffen wird. Auf der anderen Seite kann ein Erzeuger, z.B. eine KWK-Heizung, eine Solaranlage oder dergleichen teilweise auch nur ein- oder zweiphasig betrieben werden. Diese Einspeisungen führen in der Regel ebenfalls zu Schieflasten. Speist z.B. eine Solaranlage auf der Phase L1 ein und bezieht ein Elektrofahrzeug auf den Phasen L2 und L3 elektrische Leistung, so ist die Schieflast denkbar groß.

Das Dokument WO 2014/191692 A1 offenbart ein Ladeverfahren und eine Ladevorrichtung, die mittels Schaltmatrix die einzelnen Phase zu- oder abschalten lässt.

Dem Gegenstand lag somit die Aufgabe zugrunde, die Phasenlage eines Teilnehmers, z.B. einer Last oder eines Einspeisers, z.B. einer Photovoltaikanlage an aktuelle Bedingungen anpassen zu können.
Diese Aufgabe wird gegenständlich durch ein Verfahren nach Anspruch 1, ein Verfahren nach Anspruch 6, eine Vorrichtung nach Anspruch 7, eine Vorrichtung nach Anspruch 12 sowie eine Schaltmatrix nach Anspruch 13 oder 14 gelöst.
Nachfolgend ist die Rede von Teilnehmern, wenn alternativ sowohl Verbraucher als auch Erzeuger (auch Einspeiser genannt) gemeint sein können. Der Gegenstand sowie alle beschriebenen Ausführungsbeispiele lassen sich sowohl auf einen elektrischen Verbraucher als auch einen elektrischen Erzeuger anwenden.
Bei einem Verbraucher erfolgt eine Zuordnung zwischen einem Eingang der Schaltmatrix und einem Ausgang der Schaltmatrix, wobei der Eingang an einem Teilnehmernetz angeschlossen sein kann und der Ausgang an dem Verbraucher. Die Schaltmatrix hat in diesem Fall mehr Eingänge als Ausgänge. Bei einem Erzeuger erfolgt auch eine Zuordnung zwischen einem Eingang der Schaltmatrix und einem Ausgang der Schaltmatrix, wobei aber der Eingang an dem Erzeuger und der Ausgang an dem Teilnehmernetz angeschlossen sein kann. In diesem Fall hat die Schaltmatrix mehr Ausgänge als Eingänge.

In beiden Fällen ist die Schaltmatrix mit mehr Anschlüssen (Eingänge bzw. Ausgänge) an dem Teilnehmernetz angeschlossen als an dem Teilnehmer. Vorzugsweise erfolgt das Zuordnen von zumindest teilnehmerseitigen Anschlüssen der Schaltmatrix zu zumindest teilnehmernetzseitigen Anschlüssen der Schaltmatrix abhängig von der Messung. Vorzugsweise ist die Anzahl der teilnehmerseitigen Anschlüsse geringer als die Anzahl der teilnehmernetzseitigen Anschlüsse. Insbesondere kann eine Zuweisung zwischen den teilnehmerseitigen Anschlüsse und den teilnehmernetzseitigen Anschlüssen so erfolgen, dass weniger teilnehmernetzseitige Anschlüsse teilnehmerseitigen Anschlüssen zugeordnet werden, als teilnehmernetzseitige Anschlüsse vorhanden sind. Im Falle einer Last können teilnehmerseitige Anschlüsse Ausgänge und teilnehmernetzseitige Anschlüsse Eingänge sein. Im Falle eines Einspeisers können teilnehmerseitige Anschlüsse Eingänge und teilnehmernetzseitige Anschlüsse Ausgänge sein. Somit kann gegenständlich stets eine Selektion erfolgen, welche Phase oder welche Phasen des Teilnehmernetzes mit dem Teilnehmer verbunden werden. Hierdurch kann auf Schieflasten im Teilnehmernetz reagiert werden.

Bei dem gegenständlichen Verfahren kann der Verbraucher an zumindest einer Phase betreibbar sein. Ein Verbraucher kann z.B. ein Elektrofahrzeug oder ein sonstiger Hochleistungsverbraucher sein. Insbesondere kann der Verbraucher mit einer Last von mehr als 4,6 kVA pro Phase betreibbar sein.

Mit Hilfe einer Messeinrichtung kann zumindest eine elektrische Größe an zumindest zwei eingangsseitigen, vorzugsweise teilnehmernetzseitigen Phasen einer zumindest zwei Ausgänge aufweisenden Schaltmatrix gemessen werden.

Mit neuartigen Messstellen, insbesondere sogenannten Smart Meter, kann in einem Teilnehmernetz nicht nur die Gesamtsystemleistung erfasst werden, sondern die Leistungsbilanz einer jeden Phase. Es kann somit erfasst werden, welche Ströme pro Phase fließen und ermittelt werden, wie groß eine jeweilige Unsymmetrie zwischen den einzelnen Phasen ist. Mittels dieser Information ist es möglich, die Schaltmatrix so zu steuern, dass die Belastung der einzelnen Phasen symmetriert werden kann. Dies führt zu einer besseren Netzauslastung, da jede Phase möglichst optimiert genutzt wird und andererseits können Restriktionen hinsichtlich der maximalen Leistung pro Phase von Teilnehmer aufgehoben bzw. erhöht werden, da sich die Teilnehmer hinsichtlich der Phasenbelastung gegenseitig kompensieren können.

Zur Ermittlung der Belastung der einzelnen Phasen kann eine elektrische Größe, vorzugweise die Stromstärke, an den jeweiligen Phasen teilnehmernetzseitig ermittelt werden. Dabei kann es notwendig sein, die elektrische Größe an zumindest zwei Phasen eines Teilnehmernetzes, insbesondere an einem Übergabepunkt zwischen einem Verteilnetz und dem Teilnehmernetz, zu erfassen. Insbesondere wird dabei die elektrische Größe in dem Teilnehmernetz, beispielsweise in dem Hausverteilnetz gemessen.

Die jeweils gemessene elektrische Größe, insbesondere die Stromstärke bzw. auch andere gemessene Größen, wie nachfolgend noch erläutert werden wird, können zwischen zumindest den beiden teilnehmernetzseitigen Phasen miteinander verglichen werden. Es kann ermittelt werden, welche der Größen insbesondere betragsmäßig die größte ist. Auch kann ein Vorzeichen berücksichtigt werden. Anschließend kann die Schaltmatrix so betrieben werden, dass der teilnehmerseitige Anschluss, insbesondere der Ausgang der Schaltmatrix, an den der Verbraucher angeschlossen ist, an denjenigen teilnehmernetzseitigen Anschluss, insbesondere den Eingang der Schaltmatrix angeschlossen wird, bei dem die elektrische Größe, z.B. die Stromstärke oder die Gesamtleistung am kleinsten oder am größten, z.B. bei einer Strommessung, ist.

Gemäß einem Ausführungsbespiel ist die elektrische Größe eine elektrische Stromstärke und/oder ein elektrisches Potential, insbesondere eine Spannung zwischen einer jeweiligen Phase und einem Nullleiter bzw. der Spannung zwischen den Phasen untereinander und/oder die elektrische Leistung an einer jeweiligen Phase und/oder eine Phasendifferenz zwischen Strom und Spannung an einer jeweiligen Phase. Vorzugsweise erfolgt eine Symmetrierung hinsichtlich möglichst aller genannten elektrischen Größen oder einer Auswahl von mehreren der genannten elektrischen Größen durch Schalten der Schaltmatrix abhängig von den gemessenen Größen.

Um eine Zuordnung jeweils einer Phase des Teilnehmernetzes zu einem der teilnehmerseitigen Anschlüsse, insbesondere Ausgänge der Schaltmatrix zu ermöglichen, können die teilnehmernetzseitigen Anschlüsse der Schaltmatrix mit verschiedenen Phasen eines Teilnehmernetzes verbunden sein. Hierdurch kann eine Auswahl getroffen werden, welcher Phase des Teilnehmernetzes mit dem Teilnehmer verbunden wird.

Zumindest ein Eingang der Schaltmatrix kann zu zumindest einem Ausgang der Schaltmatrix zugeordnet werden. Hierzu kann eine Schaltung vorgesehen sein, die abhängig von der Messung jeweils einen Eingang auf einen Ausgang schaltet. Es werden bevorzugt weniger als alle Eingänge auf vorzugsweise alle Ausgänge geschaltet. Eine Auswahl der Eingänge, die genutzt wird, also auf Ausgänge geschaltet wird, ist dadurch möglich, dass bei der Zuordnung in der Schaltmatrix weniger Ausgänge Eingängen zugewiesen werden, als Eingänge vorhanden sind. Somit kann zumindest ein Eingang frei von einer Zuordnung zu einem Ausgang sein, wodurch dieser Eingang durch den Verbraucher nicht belastet wird.

Die Schaltmatrix kann nach einem Ausführungsbeispiel genau einen Ausgang aufweisen. In diesem Fall kann der Verbraucher ein einphasiger Verbraucher sein. Im Falle eines einphasigen Einspeisers hätte die Schaltmatrix ggf. genau einen Eingang. Auch kann der Verbraucher an genau zwei Phasen betrieben werden. Die Schaltmatrix hätte dann genau zwei Ausgänge. Im Falle eines zweiphasigen Erzeugers hätte die Schaltmatrix zwei Eingänge. Die Schaltmatrix hat vorzugsweise eine gleiche Anzahl an Ausgängen wie die Anzahl der Phasen ist, mit denen der Verbraucher betrieben wird. Im Falle eines Erzeugers hätte die Schaltmatrix vorzugsweise eine gleiche Anzahl an Eingängen wie die Anzahl der Phasen ist, mit denen der Erzeuger betrieben wird. Auch kann die Anzahl der Eingänge, bzw. Ausgänge bei einem Erzeuger, gleich der Anzahl der Phasen des Teilnehmernetzes sein. Somit kann die Schaltmatrix vorzugsweise teilnehmernetzseitig mit allen Phasen verbunden werden und ermöglicht eine selektive Zuordnung von Phasen des Teilnehmernetzes zu einzelnen Phasen des Teilnehmers, abhängig von Informationen zu der gemessenen Größe.

Mittels der Schaltmatrix kann ein Strompfad zwischen jeweils einem teilnehmernetzseitigen Anschluss und zumindest einem teilnehmerseitigen Anschluss geschaltet werden. Somit kann eine Symmetrierung der elektrischen Größen auf der Seite des Teilnehmernetzes erfolgen, in dem die Schaltmatrix die Zuordnung so vornimmt, dass die elektrischen Größen der Phasen des Teilnehmernetzes durch die vom Teilnehmer bezogene bzw. eingebrachte elektrische Größe einander angenähert werden.

Es wird vorgeschlagen, dass zumindest eine elektrische Größe laufend gemessen wird. Hierzu kann vorzugsweise zyklisch eine Messung vorgenommen werden. Die Messung kann in zeitlichen Abständen erfolgen. Somit kann die Zuordnung zwischen Eingang und Ausgang dynamisch angepasst werden und auf sich verändernde Netzbedingungen reagiert werden. Die Zuordnung erfolgt abhängig von der laufenden Messung. Insbesondere kann dynamisch, also in zeitlichen Abständen zyklisch überwacht werden, ob die vorhandene Zuordnung die optimale Symmetrierung bewirkt. Auch kann bei einer Messung kurzzeitig, also z.B. für die Dauer der Messung, der Strompfad zwischen Eingang und Ausgang getrennt werden, um die Messung unabhängig von dem Teilnehmer zu machen. Auch kann eine Messung am teilnehmerseitigen Anschluss erfolgen. Somit kann der Wert der elektrischen Größe des Teilnehmers bestimmt werden.

Es wird vorgeschlagen, dass die Zuordnung abhängig von der Messung während des laufenden Betriebs des Verbrauchers verändert wird. Verändern sich die Bedingungen im Teilnehmernetz kann es sinnvoll sein, die Belastung bzw. Entlastung der Phasen des Teilnehmernetzes durch den Teilnehmer zu verändern. Zunächst kann jedoch auch die Zuordnung zu Beginn des Betriebs des Verbrauchers abhängig von der Messung erfolgen. Auch kann diese Zuordnung zu Beginn eines Betriebs des Verbrauchers erfolgen und für die Dauer des Betriebs des Teilnehmers unverändert bleiben. Bei einer solchen statischen Zuordnung ist die Anzahl der Messungen geringer und die Anzahl der Schaltvorgänge der Schaltmatrix, was zur Verlängerung der Lebensdauer der Schaltmatrix beiträgt.

Es wird vorgeschlagen, dass die Eingänge nacheinander mit zunehmendem Betrag der gemessenen elektrischen Größe jeweils einem der Ausgänge zugeordnet werden. Wird die elektrische Größe Stromstärke oder Last der Phase gemessen, ist es sinnvoll, zunächst die Phase des Teilnehmernetzes mit der Verbraucher zu verbinden, an der diese Größe am geringsten ist und nach und nach die Phasen mit dem Verbraucher zu verbinden, bei denen diese Größe danach jeweils am geringsten ist. Bei der elektrischen Größe Spannung in den Phasen des Teilnehmernetzes wäre zunächst die Phase mit dem größten Betrag mit dem Verbraucher zu verbinden. Bei einem Erzeuger wäre die Reihenfolge bei allen elektrischen Größen genau umgekehrt. Wird insbesondere die elektrische Größe Stromstärke oder Last der Phase gemessen, ist es sinnvoll, zunächst die Phase des Teilnehmernetzes mit der Erzeuger zu verbinden, an der diese Größe am größten ist und nach und nach die Phasen mit dem Verbraucher zu verbinden, bei denen diese Größe danach jeweils größer ist. Bei der elektrischen Größe Spannung in den Phasen des Teilnehmernetzes wäre insbesondere zunächst die Phase mit dem kleinsten Betrag mit dem Erzeuger zu verbinden.

Bei dem gegenständlichen Verfahren zum Betreiben eines elektrischen Erzeugers an zumindest einer Phase eines Teilnehmernetzes wird vorgeschlagen, dass zumindest eine elektrische Größe des Teilnehmernetzes gemessen wird, wobei das Teilnehmernetz mit zumindest zwei verschiedenen Phasen an einer zumindest zwei Ausgänge aufweisenden Schaltmatrix angeschlossen ist. Anschließend kann ein Zuordnen von zumindest einem Eingang der Schaltmatrix zu zumindest einem Ausgang der Schaltmatrix abhängig von der Messung erfolgen. Im Falle eines Erzeugers kann eine Auswahl der Ausgänge, die genutzt wird, also auf Eingänge geschaltet wird, dadurch ermöglicht sein, dass bei der Zuordnung in der Schaltmatrix weniger Eingänge Ausgängen zugewiesen werden, als Ausgänge vorhanden sind. Somit kann zumindest ein Ausgang frei von einer Zuordnung zu einem Eingang sein, wodurch dieser Ausgang durch den Erzeuger nicht gespeist wird. Somit können die erzeugerseitigen Eingänge selektiv auf ausgewählte Ausgänge geschaltet werden und Unsymmetrien zwischen Phasen des Teilnehmernetzes verringert werden.

Ein weiterer Gegenstand ist eine Vorrichtung bzw. ein System eingerichtet zum Betreiben eines elektrischen Verbrauchers an zumindest einer Phase umfassend eine Messeinrichtung eingerichtet zum Messen von zumindest einer elektrischen Größe an zumindest zwei teilnehmernetzseitigen Phasen einer zumindest zwei teilnehmernetzseitigen Anschlüsse aufweisenden Schaltmatrix, mit einer Schaltmatrix eingerichtet zum Zuordnen von zumindest einem teilnehmerseitigen Anschluss der Schaltmatrix zu zumindest einem teilnehmernetzseitigen Anschluss der Schaltmatrix abhängig von der Messung, wobei die Schaltmatrix zumindest einen teilnehmerseitigen Anschluss weniger als teilnehmernetzseitige Anschlüsse aufweist. Die Anschlüsse können im Fall eines Verbrauchers teilnehmerseitig Ausgänge und teilnehmernetzseitig Eingänge sein. Die Anschlüsse können im Fall eines Einspeisers teilnehmerseitig Eingänge und teilnehmernetzseitig Ausgänge sein.

Die Messeinrichtung und/oder die Schaltmatrix können in dem Teilnehmer integriert sein. In diesem Fall kann der Teilnehmer selbstständig eine Verbindung zu ausgewählten Phasen eines Teilnehmernetzes herstellen.

Auch können die Messeinrichtung und/oder die Schaltmatrix räumlich von dem Teilnehmer getrennt, insbesondere in einem eigenen Gehäuse gebildet sind. Die Messeinrichtung kann z.B. an einem Übergabepunkt zwischen dem Teilnehmernetz und einem Verteilnetz, insbesondere im Bereich eines Hausanschlusses angeordnet sein. Die Messeinrichtung kann die Information zu der Messung, also z.B. ein Schaltbefehl oder die Größe eines gemessenen Wertes an die Schaltmatrix übermitteln. Die Schaltmatrix kann z.B. zwischen dem Übergabepunkt und dem Teilnehmer, insbesondere als eigenständige Baugruppe gebildet sein. Somit können Teilnehmer zur Durchführung des Gegenstandes nachgerüstet werden, in dem in einem Verbindungskabel zwischen Teilnehmernetz und Teilnehmer eine Schaltmatrix angeordnet wird.

In der Schaltmatrix können elektrische Schalter vorzugsweise als Halbleiterbauelemente, insbesondere als Leistungshalbleiter gebildet sein und mit einem geeigneten Prozessor abhängig von der Information zu der Messung geschaltet werden. Ein Prozessor kann in der Schaltmatrix oder der Messeinrichtung dazu programmiert sein, abhängig von einer Information zur Messung und einer Information zur elektrischen Leistung bzw. Belastung, Entlastung des Teilnehmernetzes durch den Teilnehmer die Zuordnung so vorzunehmen, dass eine momentane Unsymmetrie im Teilnehmernetz durch die elektrischen Eigenschaften des Teilnehmers verringert wird.

Die Messeinrichtung und/oder die Schaltmatrix können bevorzugt in einer Ladevorrichtung, einem Ladekabel oder einem Ladestecker für Elektrofahrzeuge integriert sein. Auch kann die Messeinrichtung und/oder die Schaltmatrix in einem Elektrofahrzeug integriert sein. Hierdurch kann ein Elektrofahrzeug unmittelbar vom Hersteller zur Durchführung des Verfahrens eingerichtet sein, oder durch geeignete Ladevorrichtungen, Ladekabel oder Ladestecker nachgerüstet werden.

Um die Information zu Messungen von der Messeinrichtung zur Schaltmatrix übermitteln zu können, wird vorgeschlagen, dass die Messeinrichtung und die Schaltmatrix in Wirkverbindung miteinander geschaltet sind, insbesondere dass zwischen der Messeinrichtung und der Schaltmatrix eine Kommunikationsverbindung gebildet ist. Der Schaltbefehl kann in der Messeinrichtung erstellt werden und als Information zur Messung an die Schaltmatrix übermittelt werden. Auch kann die Information zur Messung derart sein, dass diese die Reihenfolge der Werte (Beträge und/oder Vorzeichen) der elektrischen Größen an den Phasen des Teilnehmernetzes beinhaltet und in der Schaltmatrix der Prozessor diese Information auswertet und in Schaltbefehle umwandelt. Schließlich kann auch der Wert der Messung selbst übertragen werden und in der Schaltmatrix geeignet verarbeitet werden.

Es wird vorgeschlagen, dass die Messeinrichtung als Teil eines Stromzählers, insbesondere als Teil eines Smart Meters gebildet ist. Dies kann insbesondere dann vorteilhaft sein, wenn die Messeinrichtung an einem Übergabepunkt angeordnet ist.

Gegenständlich kann ein Teilnehmernetz z.B. ein Hausverteilnetz sein. Das entsprechende Verteilnetz kann dann das Niederspannungsnetz des Energieversorgers bzw. Verteilnetzbetreibers sein. Der Übergabepunkt kann der Hausanschlusspunkt sein. In diesem Fall ist es möglich, Unsymmetrien innerhalb des Hausnetzes festzustellen und durch einen entsprechenden Betrieb der Schaltmatrix diese Unsymmetrien zumindest teilweise zu kompensieren. Insbesondere kann eine Verschiebung des Nullpunktes bzw. Sternpunktes bewirkt werden, derart, dass dieser sich dem Sternpunkt bei symmetrischer Last annähert. Insbesondere sollen Nullleiterströme verkleinert, vorzugsweise minimiert werden.

Gemäß einem Ausführungsbeispiel wird vorgeschlagen, dass das Teilnehmernetz zumindest drei Phasen aufweist. Ein solches Teilnehmernetz, insbesondere ein Drehstromnetz, ist häufig als Hausverteilnetz oder auch als Ortsverteilnetz vorhanden. Die Phasendifferenz der drei Phasen beträgt in der Regel 120°. Ein mehr als Dreiphasennetz ist jedoch auch möglich. Sobald die elektrischen Größe der Phasen ermittelt wurde, kann die Reihenfolge der Werte der gemessenen elektrischen Größe ermittelt werden. Anschließend kann eine Schaltmatrix angewiesen werden, die Eingänge und Ausgänge so zu verschalten, dass sich die Werte der gemessenen Größen einander annähern.

In vorteilhafter Weise werden die elektrischen Größen der Phasen an dem Übergabepunkt einander angenähert. Dies bedeutet, dass die Werte der elektrischen Größen pro Phase durch den Betrieb der Schaltmatrix verändert, insbesondere angehoben oder abgesenkt werden können, insbesondere so, dass sie sich einander zumindest betragsmäßig annähern. Ziel des Betreibens der Schaltmatrix ist es dabei, eine möglichst symmetrische Verteilung der elektrischen Leistung über alle Phasen zu erzielen.

Bei der dynamischen Messung der elektrischen Größen wird vorgeschlagen, dass im laufenden Betrieb, beispielsweise in Intervallen, beispielsweise in Sekunden-, 30 Sekunden-, 1 Minuten- oder 10 Minuten-Schritten die elektrischen Größen gemessen werden. Anschließend kann dynamisch der laufende Betrieb der Schaltmatrix verändert werden, und eine Verringerung der Unterschiede der elektrischen Größen zwischen den Phasen dynamisch bewirkt werden. Es stellt sich somit ein Regelkreis ein, bei dem die elektrischen Größen der Phasen dynamisch einander angenähert werden. Eine zeitliche Verzögerung beim Anpassen der Zuordnung kann dazu genutzt werden, dass der Regelkreis nicht überschwingt.

Ein Smart Meter kann neben der Messung der Gesamtsystemleistung auch phasenspezifisch eine Messung von elektrischen Größen, insbesondere von Strom, Spannung, Phasenlage, Leistung und dergleichen durchführen. Dies kann in einer zeitlichen Auflösung von wenigen Millisekunden bis wenigen Minuten erfolgen. Insbesondere kann das Smart Meter die Information zu der gemessenen Größe in einem Intervall ausgeben, dessen Länge abhängig von der Verarbeitungsgeschwindigkeit des nachgelagerten Regelkreises ist.

Der Teilnehmer ist vorzugsweise ein zwei, drei oder mehrphasig betriebener Teilnehmer. Der Teilnehmer bezieht zum Betrieb elektrische Leistung aus zwei oder mehr Phasen gleichzeitig oder speist zwei oder mehr Phasen gleichzeitig mit elektrischer Leistung.

Nachfolgend wird der Gegenstand anhand einer ein Ausführungsbeispiel zeigenden Zeichnung näher erläutert. In der Zeichnung zeigen:
- Fig. 1a: ein Zeigerdiagramm eines dreiphasigen Netzes mit symmetrischer Belastung;
- Fig. 1b: das Zeigerdiagramm nach Fig. la zusammen mit einem Sternpunkt im Nullpunkt;
- Fig. 2a: ein Zeigerdiagramm eines dreiphasigen Netzes mit unsymmetrischer Belastung;
- Fig. 2b: das Zeigerdiagramm nach Fig. 2a zusammen mit einem Sternpunkt der aus dem Nullpunkt verschoben ist;
- Fig. 2c: das Zeigerdiagramm nach Fig. 2b mit einer Kompensation durch Verbraucher durch Verwendung der Schaltmatrix;
- Fig. 2d: das Zeigerdiagramm nach Fig. 2b mit einer Kompensation durch einen Erzeuger durch Verwendung der Schaltmatrix;
- Fig. 3: eine Schaltmatrix nach einem Ausführungsbeispiel
- Fig. 4: eine schematische Ansicht eines mit drei Teilnehmern betriebenen Teilnehmernetzes und eines Übergabepunktes zwischen einem Ortsverteilnetz und einem Hausverteilnetz sowie einer Messeinrichtung und Schaltmatrizen;
- Fig. 5: eine Schaltmatrix in einem Ladekabel;
- Fig. 6: eine Schaltmatrix in einem Elektrofahrzeug;
- Fig. 7: eine Schaltmatrix in einer Ladestation.

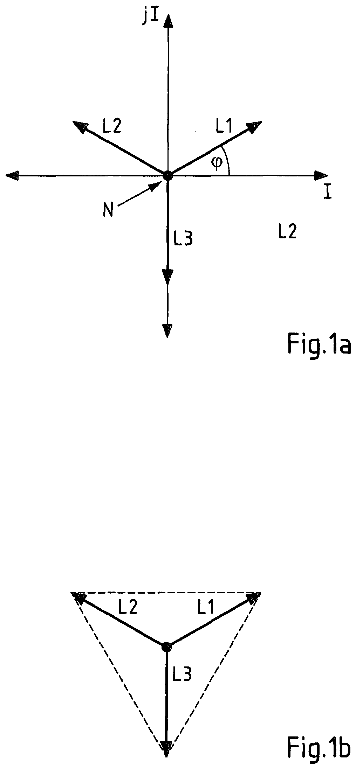

Fig. 1a zeigt zur Erläuterung ein Zeigerdiagramm eines dreiphasigen Teilnehmernetzes. Beispielhaft ist das Zeigerdiagramm der Stromstärke der drei Phasen L1, L2 und L3 dargestellt. Zu erkennen ist in der Fig. 1, dass die Ströme der drei Phasen L1, L2, L3 einen Realanteil und einen Imaginäranteil (I, jI) aufweisen. Die Phasenlage, also der Winkel ϕ einer jeden Phase verändert sich laufend mit ωt, wobei ω=2π*f, mit f gleich der Netzfrequenz ist. In der Darstellung führt dies dazu, dass die Zeiger mit der Netzfrequenz um den Nullpunkt N rotieren. Der Strom einer jeden Phase L1, L2, L3 entspricht der Länge des Zeigers (dessen Betrag) und setzt sich aus der Summe von realen und imaginären Teil zusammen.

In der Fig. 1a ist zu erkennen, dass die Stromstärken, also die Längen der Zeiger I_{L1}, I_{L2}, I_{L3} gleich lang sind und somit eine Symmetrie der Stromstärken aller drei Phasen vorliegt. Dies ist auch in Fig. 1b zu erkennen. Darin ist zu erkennen, dass die Ströme 1_{L1}, I_{L2} und I_{L3} zwischen der jeweiligen Phase L1, L2 und L3 und dem Nullleiter N sich derart summieren, dass der Sternpunkt dieser Ströme und der Nullpunkt N zusammenfallen.

Zur Vermeidung von größeren Unsymmetrien im Verteilnetz ist vorgeschrieben, dass pro Phase ein Teilnehmer maximal 4,6 kVA verbrauchen darf oder maximal 4,6 kVA einspeisen darf. Diese Maximalleistung ist abhängig von der zulässigen Stromstärke pro Phase.

Beispielsweise ist in den Niederlanden pro Phase eine Maximalstromstärke von 35 A je Phase üblich. Lädt ein Elektrofahrzeug an zwei Phasen, und befindet sich kein weiterer Großverbraucher in dem Netz, so kann das Elektrofahrzeug an jeder Phase ohne Einschränkung laden und somit beispielsweise 32 A je Phase beziehen. Dies bedeutet eine Ladeleistung von ca. 14 kW. In dem Moment, in dem im Netz ein weiterer Verbraucher an einer Phase arbeitet, beispielsweise mit 16 A, stehen für das Laden nur noch weitere 19 A an dieser Phase zur Verfügung. Bisher wurde die Ladeleistung des Elektrofahrzeugs dann auf jeder Phase auf diesen Wert beschränkt, so dass die Gesamtstromstärke auf der am meisten belasteten Phase den maximal zulässigen Wert nicht überschritt. Dies führte dazu, dass die Ladeleistung von 2 x 32 A je Phase auf nur noch 2 x 19 A je Phase und somit nur noch 8,7 kW beschränkt wurde. Dadurch wurde sichergestellt, dass die Maximalbelastung einer Phase nicht überschritten wird. Gegenständlich ist es nun durch die Schaltmatrix möglich, die beiden Phasen des Elektrofahrzeugs auf die Phasen des Teilnehmernetzes zu schalten, welche am geringsten belastet sind. Im Beispiel könnten die zwei Phasen des Fahrzeugs auf die Phasen ohne weitere Verbraucher gelegt werden, und somit weiterhin beide Phasen mit 32 A laden.

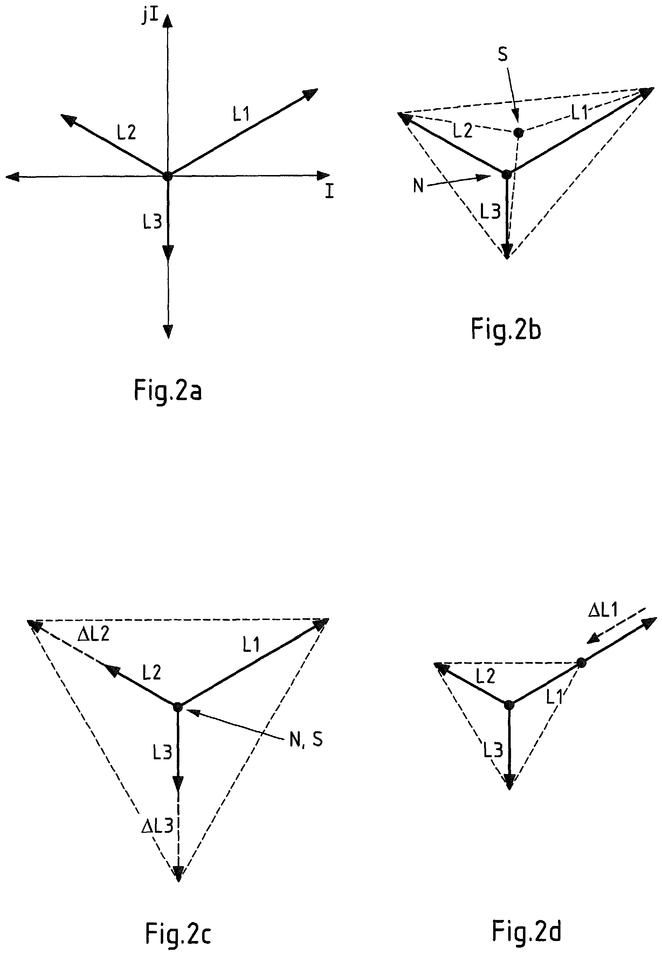

Eine Phasenunsymmetrie ist beispielsweise in der Fig. 2a dargestellt. Zu erkennen ist, dass auf Phase L1 der größte Strom I_{L1} fließt, auf Phase L2 eine mittlere Stromstärke I_{L2} und auf Phase L3 die kleinste Stromstärke I_{L3}. Die maximal zulässige Phasenunsymmetrie in Deutschland beträgt 4,6 kVA. Bei 230 V also 20 A. Um diese maximale Phasenunsymmetrie stets einhalten zu können, sind herkömmlich alle Teilnehmer derart eingestellt, dass wenn sie mit höherer Leistung betrieben sind, mehrphasig betrieben werden müssen und an den einzelnen Phasen symmetrisch betrieben werden müssen.

In der Fig. 2b ist zu erkennen, dass aufgrund der Unsymmetrie die Summe der Phasenströme ungleich 0 ist. Durch den resultierenden Strom durch den Nullleiter erfolgt eine Verschiebung des Sternpunktes S gegenüber dem Nullpunkt N. Gegenständlich wird nun vorgeschlagen, die Eingänge der Schaltmatrix mit den Ausgängen der Schaltmatrix so zu verschalten, dass der Teilnehmer stets an den Phasen des Teilnehmernetzes angeschlossen ist, an denen er der Unsymmetrie entgegen wirkt oder zumindest diese nicht vergrößert. Ein Erzeuger würde mit seinen Phasen an die Phasen des Teilnehmernetzes angeschlossen werden, die den größten Leistungsbedarf bzw. den geringsten Spannungswert der Phasen haben. Ein Verbraucher würde an die Phasen angeschlossen, die die geringste Belastung oder die höchste Spannung der Phasen haben. Ein Beispiel einer Zuordnung eines Verbrauchers ist beispielhaft in der Fig. 2c dargestellt.

In dem in Figur 2c gezeigten Beispiel ist z.B. ein zweiphasiger Verbraucher an die Ausgänge einer Schaltmatrix angeschlossen. Die Eingänge der Schaltmatrix sind mit den drei Phasen L1, L2 und L3 des Teilnehmernetzes verbunden. Zunächst werden die Ströme I_{L1}, I_{L2} und I_{L3} im Teilnehmernetz gemessen. Es wird erkannt, dass die Werte der Ströme I_{L3}, I_{L2}, I_{L1} in aufsteigender Reihenfolge den Phasen L3, L2 L1 zugeordnet werden können. Somit wäre es sinnvoll, den Verbraucher mit einer ersten Phase an die Phase L3 anzuschließen und mit einer zweiten Phase an die Phase L2. Die Phase L1 sollte unbelastet bleiben. Die teilnehmernetzseitigen Eingänge L3 und L2 werden dann durch die Schaltmatrix auf die beiden Phasen des Verbrauchers geschaltet. Die Phase L1 würde nicht geschaltet werden.

Hierdurch ergäbe sich das in Fig. 2c gestrichelt dargestellte Zeigerdiagramm. Zu erkennen ist, dass die Unsymmetrie zwischen den Phasen L1, L2 und L3 verringert (im Beispiel aufgehoben) ist. Der Sternpunkt S ist näher an den Nullleiter heran geführt (im Beispiel in den Nullpunkt geführt). Somit fließen weniger Ausgleichströme im Nullleiter N.

In dem in Figur 2d gezeigten Beispiel ist z.B. ein einphasiger Erzeuger an die Eingänge einer Schaltmatrix angeschlossen. Die Ausgänge der Schaltmatrix sind mit den drei Phasen L1, L2 und L3 des Teilnehmernetzes verbunden. Zunächst werden die Ströme I_{L1}, I_{L2} und I_{L3} im Teilnehmernetz gemessen. Es wird erkannt, dass die Werte der Ströme in absteigender Reihenfolge den Phasen L1, L2 L3 zugeordnet werden können. Somit wäre es sinnvoll, den Erzeuger mit seiner Phase an die Phase L1 anzuschließen. Die Phase L2 und L3 sollte unbelastet bleiben. Der teilnehmernetzseitige Ausgang L1 wird dann durch die Schaltmatrix auf die Phase des Erzeugers geschaltet. Die Phasen L2 und L3 würde nicht geschaltet werden.

Hierdurch ergäbe sich das in Fig. 2d gestrichelt dargestellte Zeigerdiagramm. Zu erkennen ist, dass die Unsymmetrie zwischen den Phasen L1, L2 und L3 durch das Einspeisen des Stroms in I_{L1} verringert ist. Der Sternpunkt S ist näher an den Nullleiter heran geführt. Somit fließen weniger Ausgleichströme im Nullleiter N.

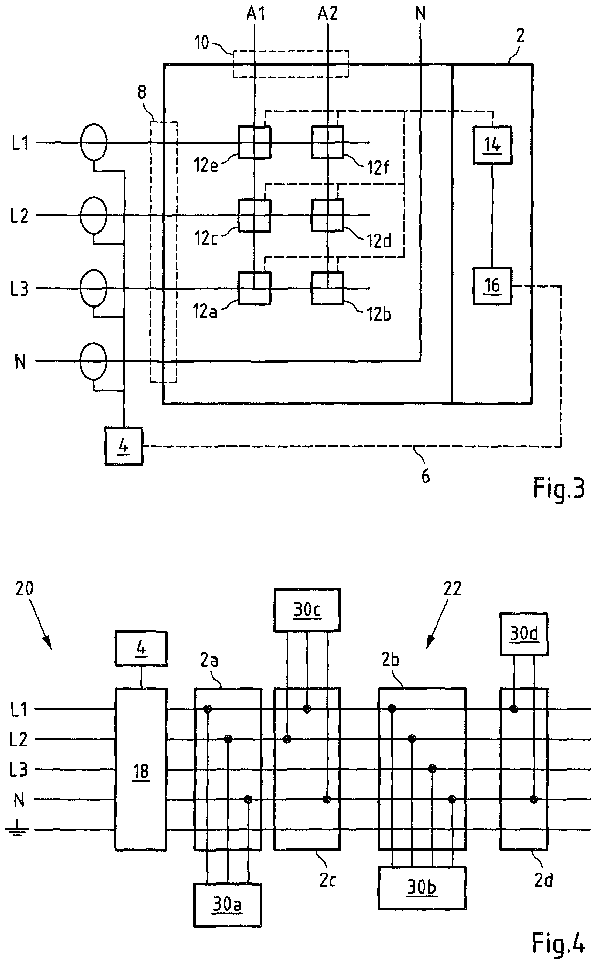

Fig. 3 zeigt eine Schaltmatrix 2 und eine Messeinrichtung 4, die über eine Kommunikationsverbindung 6 verbunden sind. Die Messeinrichtung 4 kann auch Bestandteil der Schaltmatrix 2 sein. Die Messeinrichtung 4 kann auch an einem Übergabepunkt, z.B. in Form eines Smart Meters angeordnet sein.

In der Schaltmatrix 2 sind Eingänge 8 mit Ausgängen 10 verbunden. Die Anzahl der Ausgänge 10 kann kleiner als die Anzahl der Eingänge 8 sein, vorliegend sind zwei Ausgängen A1 und A1 und drei Eingänge L1, L2 und L3 vorhanden. Es ist aber auch möglich, dass ein dritter Ausgang 10 vorhanden ist. Ein Nullleiter N kann durch die Schaltmatrix 2 durchgeschleift sein. Gleiches gilt für den Schutzleiter. Im Falle eines Erzeugers kann die Begrifflichkeit umgekehrt sein, dann sind die Ausgänge A1 und A2 als Eingänge zu bezeichnen und die Eingänge L1, L2 und L3 als Ausgänge.

Zu erkennen ist, dass in der Schaltmatrix Schalter 12a-f vorgesehen sind. Jeweils ein Schalter 12 verbindet jeweils einen Eingang L1, L2, L3 mit einem Ausgang A1, A2. Die Schalter werden über einen Prozessor 14 angetrieben. Der Prozessor ist so programmiert, dass jeweils nur die Anzahl an Schaltern 12 geschlossen ist, die der Anzahl der Ausgänge A1, A2 entspricht. Ferner ist jeweils ein Ausgang A1, A2 jeweils genauer nur mit einem Eingang L1, L2 oder L3 verbunden.

Die Schalter 12 stehen in Verbindung mit dem Prozessor 14. Der Prozessor steht mit einer Kommunikationseinrichtung 16 in Verbindung. Über die Kommunikationseinrichtung 16 ist die Messeinrichtung 4 mit der Schaltmatrix 2 verbunden. Die Verbindung kann eine Power Line Communication Verbindung sein. Andere Möglichkeiten der Verbindung sind z.B. drahtlose Verbindungen. Es sind jegliche drahtgebundene oder drahtlose Kommunikationsmittel und Protokolle möglich.

Der Prozessor 14 betreibt die Schalter 12 derart, dass eine Verschiebung der Phasenlagen wie in Fig. 2c gezeigt, ermöglicht ist. Im Falle eines Erzeugers kann der Prozessor 14 die Schalter 12 derart schalten, dass ein Verfahren wie in Fig. 2c gezeigt ist, ermöglicht ist.

Der Prozessor 14 empfängt Informationen zu einer Messung von der Messeinrichtung 4 über die Kommunikationseinrichtung 16. Der Prozessor 14 wertet diese Information aus und steuert die Schalter 12 derart an, dass Unsymmetrien einer elektrischen Größe auf den Phasen L1, L2, L3 entgegen gewirkt wird.

Fig. 4 zeigt beispielhaft einen Übergabepunkt 18 an einem Ortsnetz 20, welches als Niederspannungsnetz oder Verteilnetz verstanden werden kann. Jenseits des Ortsnetz' 20 ist ein Teilnehmernetz 22 an dem Übergabepunkt 18 angeschlossen, welches beispielsweise eine Hausverteilung ist. Der Übergabepunkt 18 kann am Hausanschlusspunkt als auch im Hausverteilkasten angeordnet sein. An dem Übergabepunkt 18 ist ein Messgerät 4 angeordnet. Mittels des Messgeräts 4, welches beispielsweise ein Smart Meter ist, kann die Leistung einer jeden Phase L1, L2, L3 ermittelt werden. Ferner kann die Phasenlage, Stromstärke, die Spannung und/oder Wirk- und Blindleistung ermittelt werden. Gegenständlich reicht es aus, wenn an dem Messgerät 4 zumindest eine dieser elektrischen Größen, vorzugsweise die Stromstärke, ermittelt wird.

Ferner ist in der Fig. 4 zu erkennen, dass an dem Teilnehmernetz 22 für jeden der Teilnehmer 30a-d jeweils eine Schaltmatrix 2a-d vorgesehen ist. Der Teilnehmer 30a kann beispielsweise eine mindestens zweiphasig betriebene Photovoltaikanlage sein. Der Teilnehmer 30c kann beispielsweise ein mindestens zweiphasig betriebener Batteriespeicher sein und der Teilnehmer 30b kann beispielsweise ein Elektrofahrzeug sein, welches dreiphasig angeschlossen ist, aber nur zweiphasig laden kann.

Ein Anschluss an den Erdungsleiter sowie den Schutzleiter für jeden der Teilnehmer 30 versteht sich und ist daher nicht eingezeichnet. Schließlich ist in der Fig. 4 ein einphasig betriebener Verbraucher 30d dargestellt.

Gegenständlich überwacht das Messgerät 4 laufend zumindest eine der elektrischen Größen jeder Phase L1, L2 L3 am Übergabepunkt 18. Informationen zu den gemessenen Größen werden an die Schaltmatrizen 2a-d übermittelt und die Teilnehmer 30 werden entsprechend an die Phasen L1, L2, L3 angeschlossen, um Unsymmetrien zwischen diesen zu verringern. Dies soll am folgenden Beispiel verdeutlicht werden.

Der Teilnehmer 30d wird beispielsweise mit 10 A betrieben. Zunächst wird im nachfolgenden Beispiel davon ausgegangen, dass die Photovoltaikanlage 30a als auch der Batteriespeicher 30c nicht in Betrieb sind. Durch den Betrieb des Teilnehmers 30d wird eine Phase mit 10 A belastet.

Durch das Messgerät 4 wird festgestellt, welche der Phasen L1, L2 und L3 am geringsten belastet ist, also wo der netzseitige Strom am geringsten ist oder die Spannung am höchsten. Diese Phase wird entweder in der Messeinrichtung 4 oder in der Schaltmatrix 2d, bzw. dem Prozessor 14 erkannt. Anschließend schaltet die Schaltmatrix 2d die Phase L1 auf den Ausgang und verbindet somit den Teilnehmer 30d mit der Phase L1, die dann mit 10A belastet wird.

Das Elektrofahrzeug 30b, welches zweiphasig betrieben wird, muss die Vorgaben hinsichtlich einer maximalen Belastbarkeit und Unsymmetrie der Phasen normalerweise beachten. Hierbei ist zu beachten, dass der Einfachheit halber nur das Elektrofahrzeug betrachtet wird, wobei in der Regel es nicht das einzelne Gerät ist, welches die Forderung nach Symmetrie beachten muss, sondern die Einhaltung der Forderung gilt für die Summe der von einem Kunden betriebenen Geräte.

Das Messgerät 4 misst erneut die Größe und stellt fest, dass die Phase L1 mit 10 A belastet ist, bzw. dass ggf. hierdurch nun die Phasen L3 und L2 weniger belastet sind, als die Phase L1. Somit wird die Schaltmatrix 2b angewiesen, die Phasen L3 und L2 mit dem Elektrofahrzeug zu verbinden. In Summe führte dies dazu, dass die drei Phasen L1, L2, L3 möglichst gleichmäßig belastet werden.

Gegenständlich reicht es bereits aus, wenn durch entsprechende Zuordnungen eine mögliche gleichmäßige Belastung, also möglichst gleichgroße elektrische Größen an den Phasen L1, L2, L3 erreicht werden.

Ausgehend von dem gezeigten Beispiel werden nun auch die Photovoltaikanlage 30a und der Batteriespeicher 30c betrachtet. Während des Betriebs der Photovoltaikanlage 30a kann diese beispielsweise auf zwei Phasen einspeisen.

Das Messgerät 4 stellt z.B. fest, dass die elektrische Last an den Phasen L1 und L2 am höchsten ist, z.B. in dem festgestellt wird, dass die Spannung an den Phasen L1 und L2 niedriger ist, als an der Phase L3. Die Schaltmatrix 2a wird daher so angesteuert oder steuert sich selbst so, dass die Schalter einen teilnehmerseitigen Eingang mit der Phase L1 verbindet und den zweiten teilnehmerseitigen Eingang mit der Phase L2 verbindet. Hierdurch werden die Spannungen an diesen Phasen L1 und L2 erhöht und die Unsymmetrie verringert.

Der Batteriespeicher 30c kann beispielsweise auch auf zwei Phasen laden. Abhängig von der gemessenen elektrischen Größe können die beiden Ausgänge des Batteriespeichers, welche an den Eingängen der Schaltmatrix 2c anliegen, mit zwei Ausgängen der Schaltmatrix 2c, welche an den Phasen L1, L2 und L3 anliegen, verbunden werden. Dies erfolgt derart, dass die beiden Eingänge der Schaltmatrix 2c mit denjenigen beiden Ausgängen der Schaltmatrix 2c verkoppelt werden, dass die Leistung des Batteriespeichers in zwei der Phasen L1, L2, L3 eingespeist wird, in denen die Spannung am geringsten ist.

Es versteht sich, dass eine Vielzahl von Beispielen denkbar sind, wie durch ein Verschalten von Teilnehmern mit Phasen durch die Schaltmatrizen innerhalb eines Teilnehmernetzes 22 möglichen Unsymmetrien am Übergabepunkt 18 entgegengewirkt werden kann.

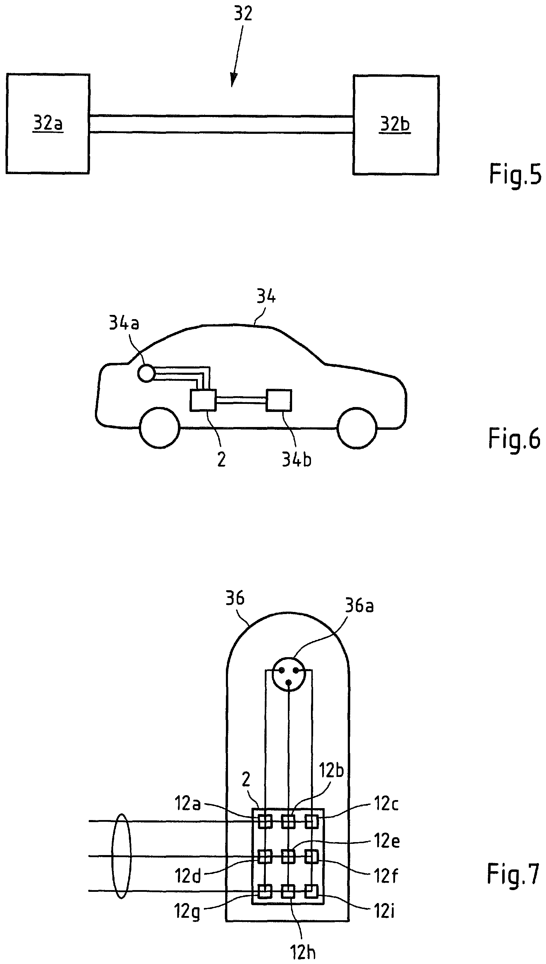

Fig. 5 zeigt ein Ladekabel 32 mit zwei Ladekabelsteckern 32a, 32b. Eine Schaltmatrix 2 und/oder ein Messgerät 4 (nicht dargestellt) kann im Ladekabel selbst oder in einem der Ladekabelstecker 32a, 32b integriert sein.

Fig. 6 zeigt ein Elektrofahrzeug 34. Über eine Ladebuchse 34a kann eine Ladesteuerschaltung 34b gespeist werden. Die Ladesteuerschaltung 34b kann z.B. zweiphasig betrieben werden. Die Ladebuchse 34a kann dreiphasig an eine Ladestation angeschlossen sein. Eine Schaltmatrix 2 kann in dem Fahrzeug 34 zwischen der Ladebuchse 34a und dem Ladesteuergerät 34b geschaltet sein. Abhängig von einer z.B. in der Schaltmatrix 2 durchgeführten Messung können zwei der drei eingangsseitigen Phasen mit den beiden Ausgängen der Schaltmatrix 2 verbunden werden.

Ähnliches ist auch bei einer Ladestation 36 gemäß Fig. 7 möglich. Die Ladestation 36 kann eingangsseitig mit einer Schaltmatrix 2 an ein Verteilnetz 20 angeschlossen sein. An der Schaltmatrix 2 können Messeinrichtungen 4 vorgesehen sein. Die Messeinrichtungen können z.B. die Spannung auf den Phasen des Verteilnetzes 20 messen. Die beiden Phasen mit den höchsten Spannungen können von der Schaltmatrix 2 auf die Ladebuchse 36a geschaltet werden. Eine dritte Phase der Ladebuchse 36a kann blind geschaltet sein, also nicht mit dem Verteilnetz 20 verbunden sein. Ein Laden ist in diesem Fall nur über zwei Phasen möglich, wobei jeweils die beiden Phasen ausgewählt werden, welche momentan im Netz am wenigsten belastet sind.

## Patentansprüche

1. Verfahren zum Betreiben eines an zumindest einer Phase betreibbaren Verbrauchers umfassend:
- Messen von zumindest einer elektrischen Größe an zumindest zwei eingangsseitigen, teilnehmernetzseitigen Phasen einer zumindest zwei Ausgänge aufweisenden Schaltmatrix, wobei die Eingänge mit verschiedenen Phasen eines Teilnehmernetzes verbunden sind,
- Zuordnen von zumindest einem Eingang der Schaltmatrix zu zumindest einem Ausgang der Schaltmatrix abhängig von der Messung, wobei in der Schaltmatrix zumindest weniger Ausgängen Eingänge zugewiesen werden, als Eingänge vorhanden sind und wobei die Zuordnung von Phasen des Teilnehmernetzes zu einzelnen Phasen des Teilnehmers selektiv, abhängig von Informationen zu der gemessenen Größe erfolgt,
- und wobei die elektrische Größe zwischen einem Verteilnetz und einem Teilnehmernetz durch ein Smart Meter gemessen wird.

2. Verfahren zum Betreiben eines elektrischen Erzeugers an zumindest einer Phase eines Teilnehmernetzes umfassend:
- Messen von zumindest einer elektrischen Größe des Teilnehmernetzes, wobei das Teilnehmernetz an zumindest zwei verschiedenen ausgangsseitigen Phasen einer zumindest zwei Ausgänge aufweisenden Schaltmatrix angeschlossen ist,
- Zuordnen von zumindest einem Eingang der Schaltmatrix zu zumindest einem Ausgang der Schaltmatrix abhängig von der Messung, wobei in der Schaltmatrix zumindest weniger Eingängen Ausgänge zugewiesen werden, als Ausgänge vorhanden sind und wobei die Zuordnung von Phasen des Teilnehmernetzes zu einzelnen Phasen des Teilnehmers selektiv, abhängig von Informationen zu der gemessenen Größe erfolgt,
- und wobei die elektrische Größe zwischen einem Verteilnetz und einem Teilnehmernetz durch ein Smart Meter gemessen wird.

3. Verfahren nach Anspruch 1 oder 2,
**dadurch gekennzeichnet,**
**dass** der Verbraucher oder Erzeuger an genau einer Phase betrieben wird und die Schaltmatrix genau einen Ausgang aufweist und/oder dass der Verbraucher an genau zwei Phasen betrieben wird und die Schaltmatrix genau zwei Ausgänge aufweist und/oder dass die Anzahl der Ausgänge gleich der Anzahl der Phasen ist, mit denen der Verbraucher oder Erzeuger betrieben wird und/oder dass die Anzahl der Eingänge gleich der Anzahl der Phasen des Teilnehmernetzes ist.

4. Verfahren nach einem der vorangehenden Ansprüche,
**dadurch gekennzeichnet,**
**dass** die zumindest eine elektrische Größe laufend, vorzugsweise zyklisch und/oder in Abständen gemessen wird und dass das Zuordnen zumindest eines der Eingänge auf jeweils einen der Ausgänge abhängig von der laufenden Messung erfolgt.

5. Verfahren nach Anspruch einem der vorangehenden Ansprüche,
**dadurch gekennzeichnet,**
**dass** die Zuordnung abhängig von der Messung während des laufenden Betriebs des Verbrauchers oder Erzeugers verändert wird und/oder dass die Zuordnung zu Beginn des Betriebs des Verbrauchers abhängig von der Messung erfolgt und/oder dass die zu Beginn eines Betriebs des Verbrauchers oder Erzeugers für die Dauer des Betriebs des Teilnehmers unverändert bleibt.

6. Verfahren nach Anspruch einem der vorangehenden Ansprüche,
**dadurch gekennzeichnet,**
**dass** die Eingänge nacheinander mit zunehmendem Betrag der gemessenen elektrischen Größe jeweils einem der Ausgänge zugeordnet werden.

7. Verfahren nach einem der vorangehenden Ansprüche, **dadurch gekennzeichnet, dass** die an zumindest einer der Phasen gemessene elektrische Größe die elektrische Stromstärke an der jeweiligen Phase und/oder das elektrische Potential der jeweiligen Phase und/oder die elektrische Leistung der jeweiligen Phase und/oder eine Phasendifferenz zwischen Strom und Spannung an der jeweiligen Phase ist.

8. Verfahren nach einem der vorangehenden Ansprüche, **dadurch gekennzeichnet, dass** Betriebsinformationen zum Betrieb der Schaltmatrix von der Messeinrichtung zu der Schaltmatrix übermittelt werden, insbesondere dass die Betriebsinformationen über das Teilnehmernetz übermittelt werden.

9. Vorrichtung eingerichtet zum Betreiben eines elektrischen Verbrauchers an zumindest einer Phase umfassend:
- eine Messeinrichtung eingerichtet zum Messen von zumindest einer elektrischen Größe an zumindest zwei eingangsseitigen teilnehmernetzseitigen Phasen einer zumindest zwei Ausgänge aufweisenden Schaltmatrix,
- Schaltmatrix eingerichtet zum Zuordnen von zumindest einem Eingang der Schaltmatrix zu zumindest einem Ausgang der Schaltmatrix abhängig von der Messung, wobei die Schaltmatrix zumindest einen Ausgang weniger als Eingänge aufweist und wobei die Schaltmatrix derart eingerichtet ist, dass die Zuordnung von Phasen des Teilnehmernetzes zu einzelnen Phasen des Teilnehmers selektiv, abhängig von Informationen zu der gemessenen Größe erfolgt,
- wobei die Messeinrichtung als Teil eines Smart Meters gebildet ist und an dem Übergabepunkt zwischen dem Verteilnetz und dem Teilnehmernetz angeordnet ist.

10. Vorrichtung nach Anspruch 9,
**dadurch gekennzeichnet,**
**dass** die Messeinrichtung und/oder die Schaltmatrix in dem Verbraucher integriert sind und/oder dass die Messeinrichtung und/oder die Schaltmatrix räumlich von dem Verbraucher getrennt, insbesondere in einem eigenen Gehäuse gebildet sind.

11. Vorrichtung nach Anspruch 9 oder 10,
**dadurch gekennzeichnet,**
**dass** die Messeinrichtung und/oder die Schaltmatrix in einer Ladevorrichtung, einem Ladekabel oder einem Ladestecker für Elektrofahrzeuge integriert ist und/oder dass die Messeinrichtung und/oder die Schaltmatrix in einem Elektrofahrzeug integriert ist.

12. Vorrichtung nach einem der Ansprüche 9 bis 11,
**dadurch gekennzeichnet,**
**dass** die Messeinrichtung und die Schaltmatrix in Wirkverbindung miteinander geschaltet sind, insbesondere dass zwischen der Messeinrichtung und der Schaltmatrix eine Kommunikationsverbindung gebildet ist.

13. Vorrichtung eingerichtet zum Betreiben eines elektrischen Erzeugers an zumindest einer Phase eines Teilnehmernetzes umfassend:
- eine Messeinrichtung eingerichtet zum Messen von zumindest einer elektrischen Größe des Teilnehmernetzes, wobei das Teilnehmernetz an zumindest zwei ausgangsseitigen Phasen einer zumindest zwei Ausgänge aufweisenden Schaltmatrix angeschlossen ist,
- Schaltmatrix eingerichtet zum Zuordnen von zumindest einem Eingang der Schaltmatrix zu zumindest einem Ausgang der Schaltmatrix abhängig von der Messung, wobei die Schaltmatrix zumindest einen Ausgang mehr als Eingänge aufweist und wobei die Schaltmatrix derart eingerichtet ist, dass die Zuordnung von Phasen des Teilnehmernetzes zu einzelnen Phasen des Teilnehmers selektiv, abhängig von Informationen zu der gemessenen Größe erfolgt,
- wobei die Messeinrichtung als Teil eines Smart Meters gebildet ist und an dem Übergabepunkt zwischen dem Verteilnetz und dem Teilnehmernetz angeordnet ist.

14. Schaltmatrix eingerichtet zum Betreiben eines an zumindest einer Phase betreibbaren elektrischen Verbrauchers wobei:
die Schaltmatrix zumindest zwei mit einem Teilnehmernetz verbindbare Eingänge und zumindest zwei mit dem Verbraucher verbindbare Ausgänge und zumindest einen Eingang mehr als Ausgänge aufweist, umfassend
- eine Empfangseinrichtung eingerichtet zum Empfangen einer Information zu einer Messung von zumindest einer elektrischen Größe des Teilnehmernetzes, und
- einer Schalteinrichtung eingerichtet zum Zuordnen von zumindest einem der Eingänge zu zumindest einem der Ausgänge abhängig von der empfangenen Information, derart, dass die Zuordnung von Phasen des Teilnehmernetzes zu einzelnen Phasen des Teilnehmers selektiv, abhängig von Informationen zu der gemessenen Größe erfolgt,
- wobei die elektrische Größe zwischen einem Verteilnetz und einem Teilnehmernetz durch ein Smart Meter gemessen wird.

15. Schaltmatrix eingerichtet zum Betreiben eines an zumindest einer Phase eines Teilnehmernetzes betreibbaren elektrischen Erzeugers, wobei die Schaltmatrix zumindest zwei mit dem Teilnehmernetz verbindbare Ausgänge und zumindest zwei mit dem Erzeuger verbindbare Eingänge und zumindest einen Ausgang mehr als Eingänge aufweist, umfassend
- eine Empfangseinrichtung eingerichtet zum Empfangen einer Information zu einer Messung von zumindest einer elektrischen Größe des Teilnehmernetzes, und
einer Schalteinrichtung eingerichtet zum Zuordnen von zumindest einem der Eingänge zu zumindest einem der Ausgänge abhängig von der empfangenen Information, derart, dass die Zuordnung von Phasen des Teilnehmernetzes zu einzelnen Phasen des Teilnehmers selektiv, abhängig von Informationen zu der gemessenen Größe erfolgt,
- wobei die elektrische Größe zwischen einem Verteilnetz und einem Teilnehmernetz durch ein Smart Meter gemessen wird.

## Claims

1. Method of operating a Consumer operable at at least one phase comprising:
- Measurement of at least one electrical variable on at least two phases on the input side of a switching matrix having at least two outputs on the subscriber network side, the inputs being connected to different phases of a subscriber network,
- Assignment of at least one input of the switching matrix to at least one output of the switching matrix as a function of the measurement, at least fewer outputs being assigned to inputs in the switching matrix than inputs being present, and the assignment of phases of the subscriber network to individual phases of the subscriber taking place selectively as a function of information about the measured variable,
- and wherein the electrical quantity between a distribution network and a subscriber network is measured by a smart meter.

2. Method for operating an electrical generator on at least one phase of a subscriber network comprising:
- Measurement of at least one electrical quantity of the subscriber network, the subscriber network being connected to at least two different output-side phases of a switching matrix having at least two outputs,
- Assignment of at least one input of the switching matrix to at least one output of the switching matrix as a function of the measurement, at least fewer inputs being assigned to outputs in the switching matrix than outputs being present, and the assignment of phases of the subscriber network to individual phases of the subscriber taking place selectively as a function of information about the measured variable,
- and wherein the electrical quantity between a distribution network and a subscriber network is measured by a smart meter.

3. Method according to claim 1 or 2,
**characterized**
**in that** the load or generator is operated on exactly one phase and the switching matrix has exactly one output and/or in that the load is operated on exactly two phases and the switching matrix has exactly two outputs and/or in that the number of outputs is equal to the number of phases with which the consumer or generator is operated and/or that the number of inputs is equal to the number of phases of the subscriber network.

4. Method according to one of the preceding claims,
**characterized**
**in that** the at least one electrical variable is measured continuously, preferably cyclically and/or at intervals, and in that at least one of the inputs is assigned to a respective one of the outputs as a function of the continuous measurement.

5. Method according to one of the preceding claims,
**characterized**
**in that** the assignment is changed as a function of the measurement during ongoing operation of the consumer or generator and/or in that the assignment is made at the start of operation of the consumer as a function of the measurement and/or in that the assignment at the start of operation of the consumer or generator remains unchanged for the duration of operation of the subscriber.

6. Method according to one of the preceding claims,
**characterized**
**in that** the inputs are successively assigned to a respective one of the outputs with increasing magnitude of the measured electrical variable.

7. Method according to one of the preceding claims,
**characterized**
**in that** the electrical variable measured at at least one of the phases is the electrical amperage at the respective phase and/or the electrical potential of the respective phase and/or the electrical power of the respective phase and/or a phase difference between current and voltage at the respective phase.

8. Method according to one of the preceding claims,
**characterized**
**in that** operating information for operating the switching matrix is transmitted from the measuring device to the switching matrix, in particular in that the operating information is transmitted via the subscriber network.

9. Apparatus adapted to operate an electrical consumer on at least one phase:
- a measuring device arranged for measuring at least one electrical variable on at least two phases of a switching matrix having at least two outputs on the input side of the subscriber network,
- a switching matrix arranged for assigning at least one input of the switching matrix to at least one output of the switching matrix as a function of the measurement, the switching matrix having at least one output less than inputs, and the switching matrix being arranged in such a way that the assignment of phases of the subscriber network to individual phases of the subscriber takes place selectively as a function of information about the measured variable,
- the measuring device being formed as part of a smart meter and being arranged at the connection point between the distribution network and the subscriber network.

10. Apparatus according to claim 9,
**characterized**
**in that** the measuring device and/or the switching matrix are integrated in the consumer and/or in that the measuring device and/or the switching matrix are formed spatially separate from the consumer, in particular in a separate housing.

11. Apparatus according to claim 9 or 10,
**characterized**
**in that** the measuring device and/or the switching matrix is integrated in a charging device, a charging cable or a charging plug for electric vehicles and/or in that the measuring device and/or the switching matrix is integrated in an electric vehicle.

12. Apparatus according to any of claims 9 to 11,
**characterized**
**in that** the measuring device and the switching matrix are operatively connected to one another, in particular in that a communication connection is formed between the measuring device and the switching matrix.

13. Apparatus arranged to operate an electrical generator on at least one phase of a subscriber network comprising:
- a measuring device arranged for measuring at least one electrical variable of the subscriber network, the subscriber network being connected to at least two output-side phases of a switching matrix having at least two outputs,
- a switching matrix arranged for assigning at least one input of the switching matrix to at least one output of the switching matrix as a function of the measurement, the switching matrix having at least one output more than inputs, and the switching matrix being arranged in such a way that the assignment of phases of the subscriber network to individual phases of the subscriber takes place selectively as a function of information about the measured variable,
- the measuring device being formed as part of a smart meter and being arranged at the connection point between the distribution network and the subscriber network.

14. Switching matrix arranged for operating an electrical consumer which can be operated on at least one phase, where:
the switching matrix has at least two inputs which can be connected to a subscriber network and at least two outputs which can be connected to the consumer and at least one input more than outputs, comprising
- a receiving device arranged to receive information about a measurement of at least one electrical variable of the subscriber network, and
- a switching device arranged to assign at least one of the inputs to at least one of the outputs as a function of the received information, in such a way that the assignment of phases of the subscriber network to individual phases of the subscriber takes place selectively as a function of information about the measured variable,
- wherein the electrical quantity between a distribution network and a subscriber network is measured by a smart meter.

15. Switching matrix arranged for operating an electrical generator which can be operated on at least one phase of a subscriber network, wherein
the switching matrix has at least two outputs which can be connected to the subscriber network and at least two inputs which can be connected to the generator, and at least one output has more than inputs, comprising
- a receiving device arranged to receive information about a measurement of at least one electrical variable of the subscriber network, and
a switching device arranged to assign at least one of the inputs to at least one of the outputs as a function of the received information, in such a way that the assignment of phases of the subscriber network to individual phases of the subscriber takes place selectively as a function of information about the measured variable,
- wherein the electrical variable between a distribution network and a subscriber network is measured by a smart meter.

## Revendications

1. Procédé d'exploitation d'un consommateur pouvant fonctionner sur au moins une phase comprenant :
- Mesure d'au moins une grandeur électrique sur au moins deux phases à l'entrée, du côté réseau d'abonné d'une matrice de commutation comportant au moins deux sorties, les entrées étant reliées à différentes phases d'un réseau,
- Affectation d'au moins une entrée de la matrice de commutation à au moins une sortie de la matrice de commutation en fonction de la mesure, où, dans la matrice de commutation, au moins moins de sorties sont affectées à des entrées que d'entrées étant présentes, et où l'affectation de phases du réseau d'abonné à des phases individuelles de l'abonné est effectuée de manière sélective en fonction des informations concernant la grandeur mesurée,
- et où la quantité électrique entre un réseau de distribution et un réseau d'abonné est mesurée par un compteur intelligent.

2. Procédé d'exploitation d'un générateur électrique sur au moins une phase d'un réseau d'abonné comprenant :
- Mesure d'au moins une grandeur électrique du réseau d'abonné, le réseau d'abonné étant relié à au moins deux phases différentes côté sortie d'une matrice de commutation comportant au moins deux sorties,
- Affectation d'au moins une entrée de la matrice de commutation à au moins une sortie de la matrice de commutation en fonction de la mesure, où, dans la matrice de commutation, au moins moins d'entrées sont affectées à des sorties que de sorties étant présentes, et où l'affectation de phases du réseau d'abonné à des phases individuelles de l'abonné est effectuée de manière sélective en fonction des informations concernant la grandeur mesurée,
- et où la quantité électrique entre un réseau de distribution et un réseau d'abonné est mesurée par un compteur intelligent.

3. Procédé selon la revendication 1 ou 2, **caractérisé**
**en ce que** le consommateur ou générateur fonctionne sur exactement une phase et la matrice de commutation a exactement une sortie et/ou **en ce que** le consommateur fonctionne sur exactement deux phases et la matrice de commutation a exactement deux sortie et/ou **en ce que** le nombre de sorties est égal au nombre de phases avec lesquelles le consommateur ou générateur fonctionne et/ou **en ce que** le nombre d'entrées est égal au nombre de phases du réseau d'abonné.

4. Procédé selon l'une des revendications précédentes, **caractérisé**
**en ce que** l'au moins une grandeur électrique est mesurée en continu, de préférence de manière cyclique et/ou par intervalles, et **en ce que** l'affectation respective d'au moins une des entrées à une des sorties est effectuée en fonction de la mesure en cours.

5. Procédé selon l'une des revendications précédentes, **caractérisé**
**en ce que** l'affectation est modifiée en fonction de la mesure au cours du fonctionnement du consommateur ou du générateur et/ou **en ce que** l'affectation est effectuée en fonction de la mesure au début du fonctionnement du consommateur et/ou **en ce que** l'affectation du début du fonctionnement du consommateur ou du générateur reste inchangée pendant la durée de fonctionnement de l'abonné.

6. Procédé selon l'une des revendications précédentes, **caractérisé**
**en ce que** les entrées sont affectées l'une après l'autre, avec une amplitude croissante de la grandeur électrique mesurée, chacune à l'une des sorties.

7. Procédé selon l'une des revendications précédentes, **caractérisé en ce que** la grandeur électrique mesurée sur au moins une des phases est l'intensité du courant électrique à la phase respective et/ou le potentiel électrique de la phase respective et/ou la puissance électrique de la phase respective et/ou une différence de phase entre courant et tension à la phase respective.

8. Procédé selon l'une des revendications précédentes, **caractérisé en ce que** des informations de fonctionnement pour le fonctionnement de la matrice de commutation sont transmises du dispositif de mesure à la matrice de commutation, en particulier **en ce que** les informations de fonctionnement sont transmises via le réseau d'abonné.

9. Dispositif configuré pour faire fonctionner un consommateur électrique à au moins une phase, comprenant :
- un dispositif de mesure configuré pour mesurer au moins une grandeur électrique sur au moins deux phases à l'entrée, du côté réseau d'abonné d'une matrice de commutation ayant au moins deux sorties,
- Matrice de commutation configurée pour affecter au moins une entrée de la matrice de commutation à au moins une sortie de la matrice de commutation en fonction de la mesure, la matrice de commutation présentant au moins une sortie de moins par rapport aux entrées, et la matrice de commutation étant configurée de telle sorte que l'affectation des phases du réseau d'abonné aux phases individuelles de l'abonné se fait de manière sélective en fonction des informations concernant la grandeur mesurée,
- le dispositif de mesure faisant partie d'un compteur intelligent et étant agencé au point de transfert entre le réseau de distribution et le réseau d'abonné.

10. Dispositif selon la revendication 9,**caractérisé**
**en ce que** le dispositif de mesure et/ou la matrice de commutation sont intégrés dans le consommateur et/ou **en ce que** le dispositif de mesure et/ou la matrice de commutation sont formés spatialement séparés du consommateur, en particulier dans un boîtier propre.

11. Dispositif selon la revendication 9 ou 10, **caractérisé**
**en ce que** le dispositif de mesure et/ou la matrice de commutation est intégré(e) dans un dispositif de charge, un câble de charge ou une fiche de charge pour véhicules électriques et/ou **en ce que** le dispositif de mesure et/ou la matrice de commutation est intégré (e) dans un véhicule électrique.

12. Dispositif selon l'une quelconque des revendications 9 à 11, **caractérisé**
**en ce que** le dispositif de mesure et la matrice de commutation sont reliés entre eux de manière opérationnelle, en particulier **en ce qu'**une liaison de communication est établie entre le dispositif de mesure et la matrice de commutation.

13. Dispositif configuré pour faire fonctionner un générateur électrique sur au moins une phase d'un réseau d'abonné comprenant :
- un dispositif de mesure configuré pour mesurer au moins une grandeur électrique du réseau d'abonné, le réseau d'abonné étant connecté à au moins deux phases côté sortie d'une matrice de commutation ayant au moins deux sorties,
- Matrice de commutation agencée pour affecter au moins une entrée de la matrice de commutation à au moins une sortie de la matrice de commutation en fonction de la mesure, la matrice de commutation ayant au moins une sortie de plus que d'entrées, et la matrice de commutation étant agencée de telle sorte que l'affectation des phases du réseau d'abonné à des phases individuelles de l'abonné se fait de manière sélective en fonction des informations concernant la grandeur mesurée,
- le dispositif de mesure faisant partie d'un compteur intelligent et étant agencé au point de transfert entre le réseau de distribution et le réseau d'abonné.

14. Matrice de commutation agencée pour faire fonctionner un consommateur électrique pouvant être exploité sur au moins une phase, où :
la matrice de commutation présente au moins deux entrées pouvant être connectées à un réseau d'abonné et au moins deux sorties pouvant être connectées au consommateur et au moins une entrée de plus que de sorties, comprenant
- un dispositif de réception configuré pour recevoir une information concernant une mesure d'au moins une grandeur électrique du réseau d'abonné, et
- un dispositif de commutation configuré pour affecter au moins une des entrées à au moins une des sorties en fonction de l'information reçue, de telle sorte que l'affectation de phases du réseau d'abonné à des phases individuelles de l'abonné s'effectue sélectivement en fonction de l'information concernant la grandeur mesurée,
- la quantité électrique entre un réseau de distribution et un réseau d'abonné étant mesurée par un compteur intelligent.

15. Matrice de commutation configurée pour faire fonctionner un générateur électrique pouvant être exploité sur au moins une phase d'un réseau d'abonné, où
la matrice de commutation présente au moins deux sorties pouvant être connectées au réseau d'abonné et au moins deux entrées pouvant être connectées au générateur, et au moins une sortie de plus que d'entrées, comprenant
- un dispositif de réception agencé pour recevoir une information concernant une mesure d'au moins une grandeur électrique du réseau d'abonné, et
un dispositif de commutation configuré pour affecter au moins une des entrées à au moins une des sorties en fonction de l'information reçue, de telle sorte que l'affectation de phases du réseau d'abonné à des phases individuelles de l'abonné s'effectue sélectivement en fonction de l'information concernant la grandeur mesurée,
- où la quantité électrique entre un réseau de distribution et un réseau d'abonné est mesurée par un compteur intelligent.
